Europäisches Patentamt

European Patent Office

Office européen des brevets

(11) Veröffentlichungsnummer: **0 249 917**

**A2**

(12) # EUROPÄISCHE PATENTANMELDUNG

(21) Anmeldenummer: **87108565.0**

(22) Anmeldetag: **13.06.87**

(51) Int. Cl.4: **G06K 19/08**

(30) Priorität: **18.06.86 DE 3620369**

(43) Veröffentlichungstag der Anmeldung:
**23.12.87 Patentblatt 87/52**

(84) Benannte Vertragsstaaten:
**AT BE CH DE ES FR GB GR IT LI LU NL SE**

(71) Anmelder: **Rosorius, Gerhard**
**Ginstertwiete 3**
**D-2085 Quickborn(DE)**

(72) Erfinder: **Müllenmeister, Thomas**
**Ahrensfelder Weg 15**
**D-2070 Grosshansdorf(DE)**

(74) Vertreter: **Schaefer, Konrad**
**Gehölzweg 20**
**D-2000 Hamburg 70(DE)**

(54) **Thermisch lesbare Flächenkennzeichnungsanordnung und Verfahren sowie Vorrichtung zu deren Temperaturaktivierung.**

(57) Eine thermisch lesbare Flächenkennzeichnungsanordnung, die mit einem Temperaturstrahlungssensor abgetastet wird, weist entweder unterschiedlich gekennzeichnete Bereiche auf, die sich durch ihr Emissionsvermögen für thermische Strahlung unterscheiden oder weist unterschiedlich gekennzeichnete Bereiche auf, die sich hinsichtlich ihrer Temperaturänderung bei Wärmezu-bzw. -abfuhr unterscheiden, wobei dann zur Temperaturaktivierung eine Wärmebehandlung nach erfindungsgemäßen Verfahren sowie mit erfindungsgemäßer Vorrichtung erforderlich ist.

Fig 1

EP 0 249 917 A2

## Thermisch lesbare Flächenkennzeichnungsanordnung und Verfahren sowie Vorrichtung zu deren Temperaturaktivierung.

Die Erfindung betrifft eine thermisch lesbare Flächenkennzeichnungsanordnung (im folgenden kurz "Flächenkennzeichnung" genannt) nach dem Oberbegriff der Ansprüche 1 und 22 sowie ein Verfahren und eine Vorrichtung zur Wärmezu-bzw. -abfuhr (im folgenden kurz "Temperaturaktivierung" genannt).

Temperaturlesbare Flächenkennzeichnungen der genannten Art zeichnen sich insbesondere dadurch aus, daß sie nur schwierig mit entsprechendem apparativem Aufwand lesbar sind und derart gestaltbar sind, daß sie in sichtbarem Spektralbereich sich von der umgebenden Fläche nicht unterscheiden. Sie sind außerdem nur mit erheblichem Aufwand herstellbar.

Dadurch sind derartige Flächenkennzeichnungen sehr fälschungssicher und hinsichtlich des apparativen Aufwandes beim Lesen auch relativ sicher gegen unbefugtes Lesen.

Eine temperaturlesbare Flächenkennzeichnung mit Verfahren zur Temperaturaktivierung ist aus der US-PS 3 511 973 bekannt. Es werden flächig angeordnete elektrische Widerstände unterschiedlichen Widerstandswertes verwendet, die bei Beaufschlagung mit gleicher Spannung unterschiedliche Temperaturen annehmen, die mit geeigneten Mitteln abtastbar sind.

Derartige Kennzeichnungen sind aber in ihrem Anwendungsbereich beschränkt. Es müssen an der Flächenkennzeichnung elektrische Kontakte vorgesehen sein, die zur Temperaturaktivierung mit einer Stromquelle verbunden werden müssen. Es ergibt sich dadurch eine Reihe von Einschränkungen.

So sind die elektrischen Kontakte stets sichtbar und auffällig, was einer Geheimkennzeichnung im Wege steht. Durch den notwendigen Anschluß einer Stromquelle beschränkt sich das Lesen im wesentlichen auf stationäre Lesegeräte.

Die Aufgabe der vorliegenden Erfindung besteht darin, eine thermisch lesbare Flächenkennzeichnungsanordnung und ein Verfahren sowie eine Vorrichtung zur Wärmezu-bzw. -abfuhr zu schaffen, womit die Wärmezu-bzw. -abfuhr auf einfachere Weise möglich ist.

Diese Aufgabe wird erfindungsgemäß mit einer Flächenkennzeichnung der im Kennzeichen des Anspruches 1 genannten Art gelöst.

Die erfindungsgemäße Flächenkennzeichnung wird auf weitgehend beliebige, im folgenden näher dargelegte Art einer Wärmebehandlung unterzogen, was erheblich einfacher ist und auch bei völlig unauffälliger, optisch neutraler Gestaltung der Flächenkennzeichnung erfolgen kann. Die gekennzeichneten und nicht gekennzeichneten Bereiche brauchen sich nur dadurch voneinander zu unterscheiden, daß sie bei gleichmäßiger Wärmebehandlung unterschiedliche Temperaturänderungen ergeben, die abgetastet werden können. Dieses unterschiedliche Verhalten der Bereiche ist auf verschiedene Weise erreichbar, wie im folgenden dargelegt.

Vorteilhaft sind die Merkmale des Anspruches 2 vorgesehen. Dies kann beispielsweise erreicht werden durch Ausbildung der gekennzeichneten Bereiche als langgestreckte Metallstreifen, während die ungekennzeichneten Bereiche aus einem Kunststoff geringen Wärmeleitvermögens ausgebildet sind. Werden beide Bereiche gleichmäßig wärmebehandelt, so ergeben sich durch den unterschiedlichen Wärmefluß zur Umgebung an den abgetasteten Stellen unterschiedliche Temperaturen.

Alternativ sind vorteilhaft die Merkmale des Anspruches 3 vorgesehen. Wird auf derartigen Bereichen eine gleichmäßige Wärmemenge zu-oder abgeführt, so ergibt sich aufgrund der unterschiedlichen Wärmekapazität eine unterschiedliche Temperaturänderung. Beispielsweise können Kunststoff-und Metallkörper gleichen Volumens mit nebeneinanderliegenden Oberflächen die Flächenkennzeichnung bilden.

In einer weiteren Alternative sind vorteilhaft die Merkmale des Anspruches 4 vorgesehen. Hierbei können alle Bereiche mit gleicher Strahlungsintensität bestrahlt werden, nehmen aber aufgrund der unterschiedlichen Absorption der Strahlung unterschiedliche Wärmemengen auf und erhalten demzufolge unterschiedliche Temperaturen. Als Strahlung kann jede geeignete Strahlung verwendet werden, die nach Absorption im jeweiligen Material Wärme erzeugt.

Weiterhin vorteilhaft sind die Merkmale des Anspruches 5 vorgesehen. Hierdurch wird eine für Routineanwendung geeignete einfach herstellbare und anbringbare Konstruktion geschaffen.

Weiterhin vorteilhaft sind die Merkmale des Anspruches 6 vorgesehen. Hierdurch läßt sich die Flächenkennzeichnung nach außen unsichtbar gestalten, im Sinne einer Geheimkennzeichnung, wie an sich aus der GB-PS 1 516 832 bekannt. Eine solche Deckschicht ist insbesondere dann von Vorteil, wenn die eigentliche Flächenkennzeichnung optisch erkennbar ist.

Ein erfindungsgemäßes Verfahren zur Temperaturaktivierung ist vorteilhaft durch die Merkmale des Anspruches 7 gekennzeichnet.

Man könnte daran denken, ein Verfahren der im DE-GM 79 35 267 beschriebenen Art zu verwenden, wobei ein kodierter Flächenbereich mit Infrarotstrahlung bestrahlt und die reflektierte Strahlung gemessen wird. Der Empfänger könnte geeignet zur Messung von Oberflächentemperaturen ausgebildet sein. Es zeigt sich aber, daß eine solche Reflexionsmessung nicht die Oberflächentemperaturen erfassen kann, da die thermische Abstrahlung der Oberflächen sehr klein im Verhältnis zur reflektierten Strahlintensität ist, in der die thermische Strahlung untergeht.

Allerdings ist es im Rahmen der Erfindung auch möglich, während der Wärmebehandlung die Abtastung vorzunehmen. Es muß dann dafür Sorge getragen werden, daß bei der Wärmebehandlung Wärme gleichmäßig über die Fläche der Flächenkennnzeichnungsanordnung zugeführt wird. Dazu kann beispielsweise ein unter der Flächenkennnzeichnungsanordnung liegender Gegenstand beheizt oder gekühlt werden, so daß sich eine Temperaturdifferenz gegenüber der Umgebungsluft ergibt, die auf der Oberfläche der Flächenkennnzeichnungsanordnung vorbeiströmt. Aufgrund unterschiedlicher Wärmeleitung der gekennzeichneten und nicht gekennzeichneten Bereiche der Flächenkennnzeichnungsanordnung ergeben sich dann unterschiedliche Oberflächentemperaturen, die abgetastet werden können. Vorteilhaft ist ein solches Verfahren bei mit einer Flächenkennnzeichnungsanordnung gekennzeichneten Gegenständen, die aus anderen Gründen ohnehin beheizt oder gekühlt sind, also beispielsweise bei Heizkörpern, Kühlkörpern oder beispielsweise bei Gegenständen, die mit höherer Temperatur einen Ofen verlassen und dann thermisch abgetastet werden sollen.

Das erfindungsgemäße Verfahren arbeitet mit einer Wärmebehandlung, die von der Abtastung getrennt erfolgt. Im folgenden sind mehrere Trennungsmethoden angegeben. Es wird dadurch verhindert, daß die Wärmebehandlung den Abtastsensor beeinflußt. Dieser kann also sehr kleine Temperaturdifferenzen zwischen den gekennzeichneten und nicht gekennzeichneten Bereichen erkennen.

Vorteilhaft sind dabei die Merkmale des Anspruches 8 vorgesehen. Eine solche Wärmebehandlung läßt sich sehr einfach realisieren. Ein solcher Heiz-bzw. Kühlkörper kann beispielsweise auch im Rollkontakt über eine Flächenkennnzeichnung geführt werden, was für verschiedene Zwecke, z. B. längere Kennzeichnungen, von Vorteil sein kann.

Alternativ dazu sind vorteilhaft die Merkmale des Anspruches 9 vorgesehen. Auf diese Weie läßt sich Wärme einbringen, wobei durch geeignete Strahlungsfokussier-und Blendeneinrichtungen sehr genaue örtliche Beaufschlagung erreichbar ist. Insbesondere ist hierdurch berührungslose und bei Erhöhung der Strahlintensität sehr schnelle Messung möglich.

Vorteilhaft sind die Merkmale des Anspruches 10 vorgesehen. Eine ganzflächige Wärmebehandlung des gesamten Kennzeichnungsbereiches hat den Vorteil, daß nicht genau gezielt werden muß. Dennoch lassen sich aufgrund der unterschiedlichen Reaktion der gekennzeichneten und ungekennzeichneten Bereiche z. B. mittels unterschiedlicher Wäremeableitung in die Unterlage, beispielsweie ein größeres gekennzeichnetes Metallteil, die gewünschten Temperaturunterschiede erzielen.

Alternativ dazu sind vorteilhaft die Merkmale des Anspruches 11 vorgesehen. Hierbei wird nur der Bereich der Abtastspur wärmebehandelt. Dadurch lassen sich besser die unterschiedlichen Reaktionseffekte der Kennzeichnung beispielsweise mittels Wärmeleitung oder Wärmekapazität ausnutzen, da der an den wärmebehandelten Bereich anschließende Flächenbereich unbehandelt bleibt und somit eine Temperaturdifferenz ergibt, die ausgenutzt werden kann.

Hinsichtlich der bei dem erfindungsgemäßen Verfahren vorzusehenden Trennung von Wärmebehandlung und Abtastung sind vorteilhaft die Merkmale des Anspruches 12 vorgesehen. Bei zeitlicher Trennung, wobei die Abtastung im zeitlichen Abstand zur Wärmebehandlung erfolgt, ist eine Wechselbeeinflussung auf einfache Weise ausgeschlossen.

Alternativ dazu sind die Merkmale des Anspruches 13 vorgesehen. Eine räumliche Trennung kann dadurch erfolgen, daß die Wärmebehandlung an anderer Stelle erfolgt als die Abtastung. Beispielsweise kann gleichzeitig mit der Abtastung die Wärme einem flächengekennzeichneten Gegenstand von unten zugeführt werden, während von oben abgetastet wird.

Vorteilhaft dabei sind die Merkmale des Anspruches 14. Hier werden langgestreckte Kennzeichen an ihrem einen Ende erwärmt und leiten die Wärme zu ihrem anderen Ende, wo die Oberflächentemperatur abgetastet wird. Da die Wärmeleitung bei den gekennzeichneten Bereichen anders ist als bei den ungekennzeichneten Bereichen, ergeben sich Temperaturunterschiede. Der wärmebehandelte Streifen kann auf ganzer Länge konstant wärmebehandelt werden. Es ist aber auch möglich, auf diesem Streifen mit einem Aufheizfleck entlangzufahren, während der Abtaster parallel dazu die Abtastspur abtastet.

Eine weitere Alternative zur Trennung ist in Anspruch 15 angegeben. Beispielsweise kann die Wärme durch ultraviolette Bestrahlung, welche unterschiedlich absorbiert wird, eingebracht werden. Die reflektierte UV-Strahlung kann aufgrund des stark unterschiedlichen Spektralbereiches einen Temperatursensor, der in diesem Bereich unempfindlich ist, nicht beeinflussen. Auch näher gelegene Strahlungsbereiche, wie beispielsweise das nahe IR, sind bei geeigneter Geräteausbildung verwendbar. Es lassen sich aber auch niederfrequente elektrische Wechselfelder verwenden, die eine induktive bzw. kapazitive Aufheizung der Flächenkennzeichnungsanordnung bewirken. Dabei werden bei induktiver Aufheizung diejenigen Flächenbereiche stärker aufgeheizt, die besser elektrisch leitend sind, beispielsweise Metallstreifen, während dazwischenliegende Kunststoffbereiche nicht aufgeheizt werden. Bei Ausnutzung des kapazitiven Effektes ist die Situation umgekehrt. Schlecht leitende Materialien, wie beispielsweise Kunststoff, wirken als Dielektrikum und werden aufgeheizt.

Erfindungsgemäße Vorrichtungen sind durch die Merkmale der Ansprüche 16 bis 21 gekennzeichnet.

In einer Ausführung alternativ zu der des Anspruches 1 kann die eingangs erwähnte Aufgabe der vorliegenden Erfindung durch eine Flächenkennzeichnung mit den Merkmalen des Anspruches 22 gelöst werden. Bei einer solchen Flächenkennzeichnung ergibt sich auch bei gleicher Oberflächentemperatur der unterschiedlich gekennzeichneten Bereiche aufgrund deren unterschiedlichen Emissionsvermögens unterschiedliche Wärmeabstrahlung, die mit einem wärmestrahlungsempfindlichen Sensor abgetastet werden kann.

In den Zeichnungen ist die Erfindung beispielsweise und schematisch dargestellt. Es zeigen:

Fig. 1 eine Flächenkennzeichnung im Schnitt mit Temperaturaktivierungseinrichtung und Abtasteinrichtung,

Fig. 2 die Flächenkennzeichnung in Draufsicht,

Fig. 3 bis 6 verschiedene Ausführungsformen von Flächenkennzeichnungen,

Fig. 7 eine Draufsicht zu Fig. 6,

Fig. 8 und 9 in Draufsicht und im Schnitt durch die Flächenkennzeichnung eine Vorrichtung zur Kontaktwärmebeaufschlagung,

Fig. 10 bis 12 Draufsichten gemäß Fig. 8 zur Darstellung unterschiedlicher Temperaturaktivierungsverfahren,

Fig. 13 im Schnitt durch eine Flächenkennzeichnung ein weiteres Temperaturaktivierungsverfahren und

Fig. 14 im Schnitt eine Flächenkennzeichnung mit Bereichen unterschiedlichen Emissionsvermögens.

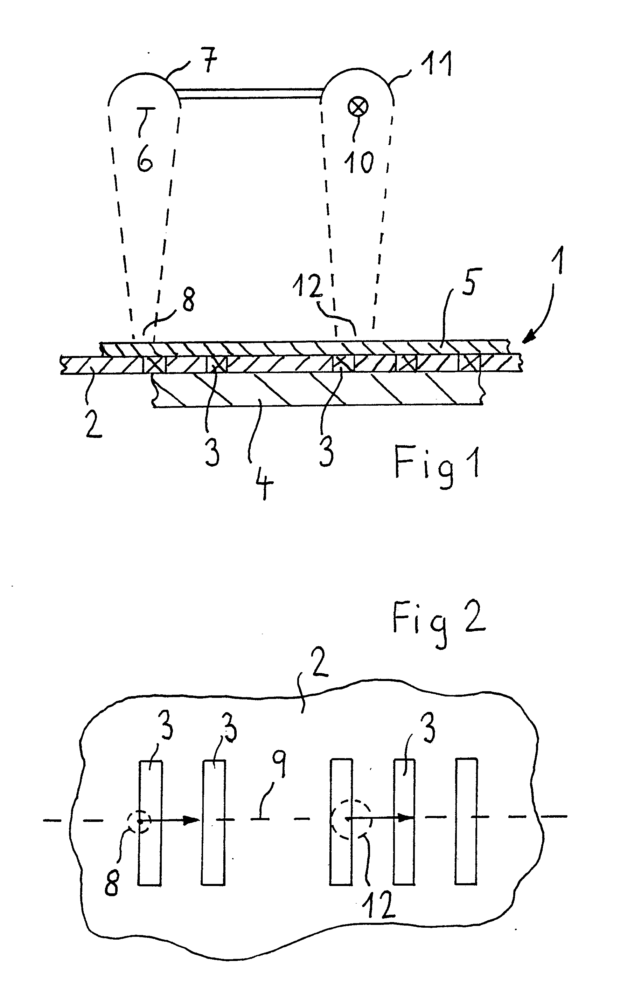

Fig. 1 zeigt eine Flächenkennzeichnung 1, bestehend aus einer Kunststoffschicht 2 mit eingebetteten Metallstreifen 3, die in Fig. 2 in Draufsicht erkennbar sind. Dabei bilden die Metallstreifen 3 die Kennzeichnung. In Querrichtung der Zeichen ergibt sich eine Kodierung mit aufeinanderfolgenden unterschiedlichen Abständen, die maschinenlesbar und z. B. in eine Zahl umwandelbar ist, wie dies von optisch lesbaren Streifencodes auf Verpackungen aller Art bekannt ist.

Diese Flächenkennzeichnung 1 ist auf der Oberfläche eines zu kennzeichnenden Gegenstandes 4 aufgebracht. Bei diesem Gegenstand 4 kann es sich beispielsweise um eine Scheckkarte handeln.

Auch andere Gegenstände weitgehend beliebiger Art lassen sich in dieser Weise kennzeichnen, beispielsweise Automobilkarosserien, Fernseher, Milchtüten od. dgl..

Uber der Flächenkennzeichnung 1 ist eine Deckschicht 5 aufgebracht, die sich durch möglichst geringe Wärmeleitung auszeichnet und beispielsweise aus einem Kunstharzlack bestehen kann, der im optisch sichtbaren Bereich undurchlässig ist und somit die im unbedeckten Zustand mit dem Auge lesbare Flächenkennzeichnung optisch abdeckt.

Der Gattung der vorliegenden Erfindung entsprechend soll eine Temperaturabtastung erfolgen. Dazu ist ein Temperatursensor 6 vorgesehen, der mittels eines Reflektors 7 einen kleinen Abtastpunkt 8 auf der abzutastenden Oberfläche betrachtet. Der solcherart ausgestaltete Abtaster 6, 7 wird in Pfeilrichtung quer zur Erstreckung der Metallstreifen 3, also in Kodierungsrichtung auf der Abtastspur 9 bewegt. Er wird im Abstand zur Oberfläche also berührungslos geführt.

Befindet sich die in den Fig. 1 und 2 dargestellte gekennzeichnete Oberfläche im thermischen Gleichgewicht, so haben die gekennzeichneten und ungekennzeichneten Bereiche gleiche Temperatur. Der Abtaster 6, 7 erkennt nichts. Es muß zunächst eine Temperaturaktivierung durchgeführt werden.

Im dargestellten Ausführungsbeispiel der Fig. 1 dient zur Temperaturaktivierung eine Strahlungsquelle 10, beispielsweise eine Glühlampe, die mittels eines Reflektors 11 einen Strahlfleck 12 auf der Oberfläche erzeugt. Im dargestellten Ausführungsbeispiel läuft der Strahlfleck 12 auf der Abtastspur 9. Strahlungsquelle 10 und Abtaster 6 sind starr miteinander gekoppelt, so daß der Abtastpunkt 8 in festem Abstand hinter dem Strahlfleck 12 auf der Abtastspur 9 in Pfeilrichtung entlangläuft. Der Abtastpunkt 8 sieht also jeweils Oberflächenbereiche, die zuvor von dem Strahlfleck 12 erwärmt wurden.

Dabei sind bei konstanter Bewegungsgeschwindigkeit Oberflächenbereichen über den Metallstreifen 3 gleiche Wärmemengen zugeführt worden, wie den dazwischenliegenden nur von Kunststoff erfüllten Bereichen. Dort, wo Metallstreifen 3 liegen, wird von diesen aber Wärme aufgrund der höheren Wärmeleitung schnell aus dem wärmebeaufschlagten Bereich zu den Seiten abtransportiert, und zwar schneller, als in den Zwischenbereichen Wärme durch den Kunststoff abfließen kann.

Aufgrund dieser unterschiedlichen Wärmeleitung sind die vom Abtastpunkt 8 erfaßten Oberflächenbereiche der Deckschicht 5 über den Metallstreifen 3 kühler als über den Zwischenbereichen. Es ergeben sich somit unterschiedliche Oberflächentemperaturen, die den Code thermisch ablesbar machen. Als Temperatursensor 6 sind handelsübliche Sen soren geeignet, die im Bereich thermischer Strahlung, also elektromagnetischer Wellen im Wellenlängenbereich zwischen etwa $1\mu$ und $14\mu$ empfindlich sind und im Bereich der Raumtemperatur geringe Oberflächentemperaturunterschiede von beispielsweise wenigen zehntel Grad erfassen können. Hierfür sind insbesondere sogenannte Thermopiledetektoren verwendbar.

Es sei noch angemerkt, daß das Abtasten nicht auf Abtasten in einer Abtastspur 9 beschränkt ist. Durch mehrspuriges Abtasten können beispielsweise auch Flächenmuster erfaßt werden.

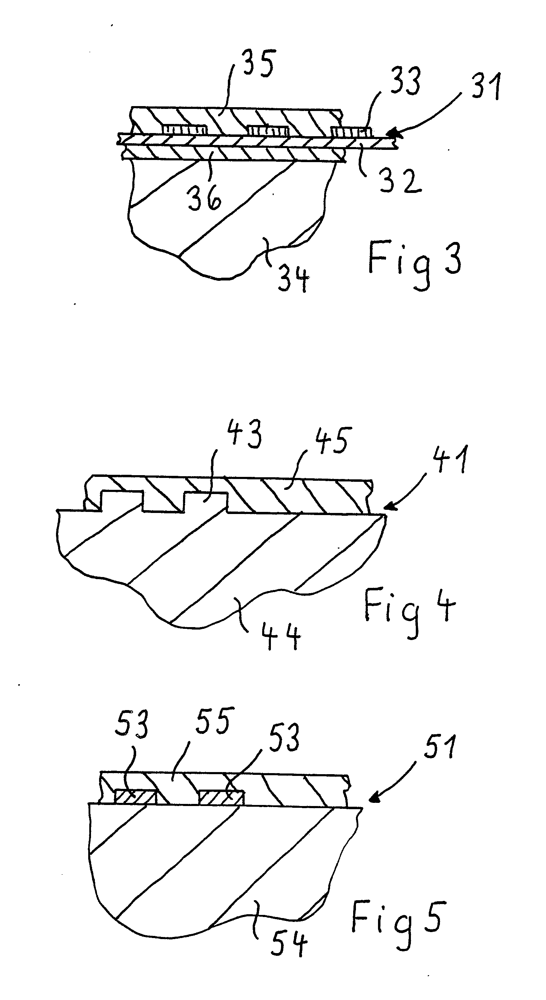

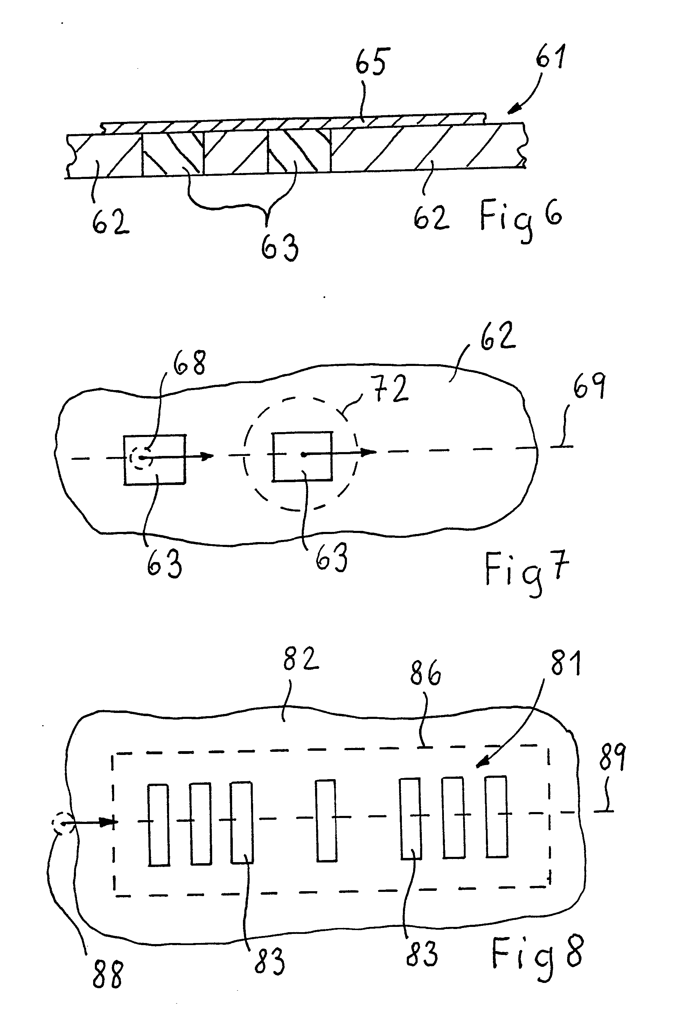

Fig. 3 zeigt in einer Variante eine Flächenkennzeichnung 31, die in einem sehr einfach handhabbaren Ausführungsbeispiel aus einer Kunststoffolie 32 mit aufgedampften Metallfilmstreifen 33 besteht, die in Draufsicht beispielsweise gemäß Fig. 2 angeordnet sein können. Im dargestellten Beispiel ist die Kennzeichnung eines Gegenstandes 34 gewählt, der beispielsweise ein größeres Metallwerkstück sein kann, beispielsweise ein Karosserieteil oder Motorblock eines Fahrzeuges. Die metallbedampfte Folie 32, die nach Art eines üblichen Etikettes ausgebildet sein kann, wird auf eine Grundierfarbschicht 36, die den Gegenstand 34 bedeckt, aufgeklebt und mit einer Deckschicht 35 nach außen schützend und optisch unkenntlich abgedeckt. Die Deckschicht 35 kann beispielsweise aus dem Karosserielack bestehen.

Die Temperaturaktivierung und die Abtastung können mit der in Fig. 1 dargestellten Vorrichtung nach dem dort erläuterten Verfahren erfolgen, wobei Wärmeleitungsunterschiede ausgenutzt werden, die durch die eingebrachten Metallfilmstreifen 33 mit ihrer hohen Wärmeleitung gegenüber den umgebenden Kunststoffmaterialien gegeben sind.

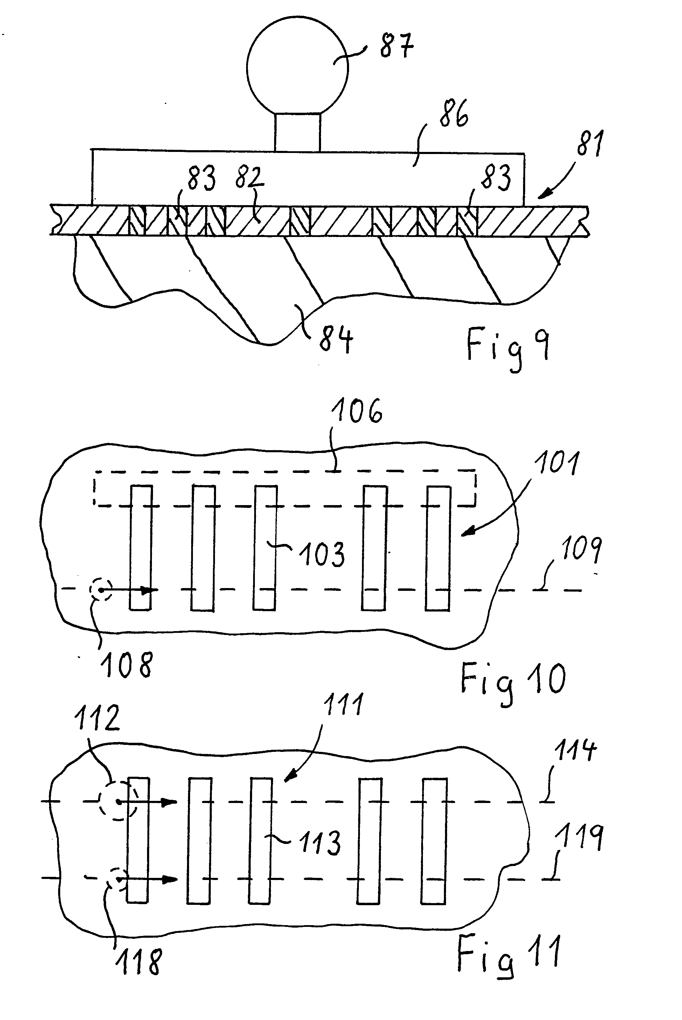

Fig. 4 zeigt eine Variante, bei der auf einem Gegenstand 44 erhabene Oberflächenmarkierungen 43 vorgesehen sind. Diese sind nach außen glattflächig mit einer die Vertiefungen füllenden Deckschicht 45 unsichtbar abgedeckt. Bei Temperaturaktivierung nach dem in Fig. 1 dargestellten Ausführungsbeispiel ergeben sich Temperaturunterschiede dadurch, daß bei Oberflächenerwärmung der Deckschicht 45 über den Markeirungen 43 die Wärme aufgrund der geringeren Schichtdicke schneller in den gut leitenden Gegenstand 44 abgeführt wird als in den Zwischenbereichen über den Vertiefungen. Es ergeben sich somit abtastbare Temperaturunterschiede auf der Oberfläche der Deckschicht 45.

Fig. 5 zeigt zu Fig. 4 eine Variante, in der auf der Oberfläche eines Gegenstandes 54 Metallstreifen 53 direkt aufgebracht und mit einer Deckschicht 55 abgedeckt sind. Je nachdem, ob der Gegenstand 54 schlecht oder gut wärmeleitend ist, ergibt sich der zu Fig. 3 bzw. zu Fig. 4 erläuterte Temperaturaktivierungseffekt.

Die Fig. 6 und 7 zeigen im Schnitt bzw. in Draufsicht eine Flächenkennzeichnung 61, die als in Richtung einer Abtastspur 69 erstreckte Punktzeichnung ausgebildet ist. Die Kennzeichnungspunkte sind als Metallstücke 63 von im dargestellten Ausführungsbeispiel quadratischer Grundform ausgebildet, die in einer Kunststoffschicht 62 eingebettet und von einer Deckschicht 65 abgedeckt sind. Die dargestellte Anordnung kann auf einem zu kennzeichnenden Gegenstand angebracht sein, der der Einfachheit halber nicht dargestellt ist.

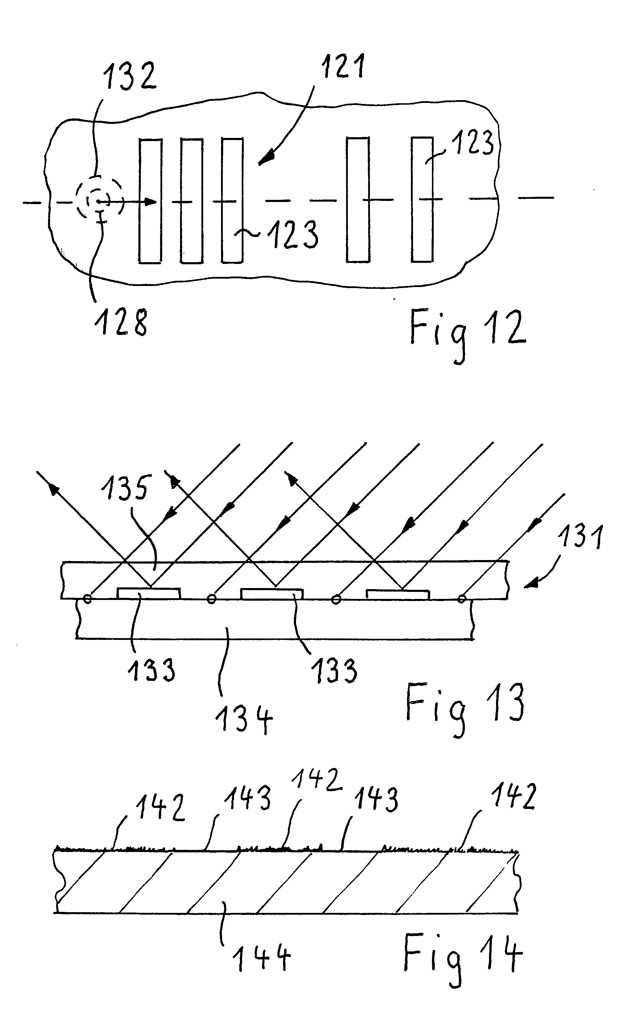

Temperaturaktivierung und Abtastung erfolgen mit einer Einrichtung, wie sie in Fig. 1 dargestellt ist. Der Abtastpunkt 68 ist wiederum relativ klein gehalten. Der Strahlfleck 72 ist aber wesentlich größer als bei der Ausführungsform der Fig. 12 und überdeckt vollständig die gesamte Oberfläche eines Metallstückes. Die Metallstücke 63 werden dabei auf der gesamten Fläche gleichmäßig erwärmt.

Wärmeleiteffekte in Flächenrichtung können bei dieser Ausführungsform nicht ausgenutzt werden. Dennoch sind zwei Effekte auswertbar, um abzutastende Temperaturunterschiede zu erzielen.

Zum einen kann die unterschiedliche Wärmeleitung quer zur Fläche ausgenutzt werden, also lotrecht zu der Deckschicht 65. Aus erwärmten Oberflächenbereichen der Deckschicht 65 über einem Metallstück 63 wird nach unten schneller Wärme abtransportiert als in den Bereichen über der Kunststoffschicht 62. Über den Metallstücken 63 kühlt die Oberfläche also schneller ab, so daß der in zeitlichem Abstand folgende Abtastpunkt 68 unterschiedliche Oberflächentemperaturen sieht. Voraussetzung ist hier, daß der Untergrund, also ein Gegenstand, auf dem diese Anordnung aufgebracht ist, gut wärmeleitend ist.

Liegt die dargestellte Anordnung gemäß Fig. 6 frei in der Luft oder ist auf einem schlecht wärmeleitenden Gegenstand angeordnet, so werden dennoch Temperaturunterschiede aktiviert. Das Kunststoffmaterial der Kunststoffschicht 62 hat eine wesentlich kleinere Wärmekapazität als das Metall der Metallstücke 63. Bei gleich großer pro Oberflächeneinheit aufgebrachter Wärmemenge nehmen Metall und Kunststoff demzufolge unterschiedliche Temperaturen an. Dieser Effekt ist unabhängig von Wärmeleitungsvorgängen. Wärmeleitungseffekt und Wärmekapazitätseffekt werden in der Regel kombiniert auftreten, also beispielsweise auch bei den in den vorhergehenden Figuren dargestellten Ausführungsbeispielen.

Am Beispiel der Fig. 6 sei noch erläutert, daß die Effekte grundsätzlich auch ohne Deckschicht 65 funktionieren, zumeist sogar noch besser. Es ist dann aber in der Regel die Flächenkennzeichnung von außen optisch ablesbar, was einer Verwendung als Geheimkennzeichnung entgegensteht. Optisch sichtbare Unterschiede zwischen gekennzeichneten und nicht gekennzeichneten Bereichen können aber auch auf andere Weise als mit einer Deckschicht vermieden werden, beispielsweise durch Verwendung sehr ähnlich aussehender Materialien, die sich aber durch Wärmeleitung und/oder Wärmekapazität unterscheiden. Hierzu sind beispielsweise Keramiken unterschiedlicher Zusammensetzung, jedoch gleichen Aussehens verwendbar.

In Fig. 8 und 9 ist eine Flächenkennzeichnung 81 schematisch dargestellt, die in einem Ausführungsbeispiel nur aus einer Kunststoffschicht 82 mit eingebetteten Metallstreifen 83 besteht.

Es soll an diesem Beispiel eine Temperaturaktivierungsmethode erläutert werden, die alternativ zur Strahlungserwärmung gemäß der Ausführungsform der Fig. 1 verwendet werden kann. Im dargestellten Ausführungsbeispiel wird ein Heizkörper verwendet, der in Form eines Stempels mit einer schweren wärmespeichernden Platte 86 mit Handgriff 87 ausgebildet ist und mit seiner in Fig. 8 gestrichelt dargestellten Fläche ganzflächig die Flächenkennzeichnung abdeckend in Oberflächenkontakt gebracht wird. Die Platte 86 wurde zunächst beispielsweise in einem Ofen auf höhere Temperatur gebracht. Bei Kontakt mit der Oberfläche dr Flächenkennzeichnung 81 wird Wärme in die Struktur eingebracht. Nach kurzzeitigem Gegenhalten wird der Stempel abgenommen. Anschließend kann mit einem Abtastpunkt 88 in Pfeilrichtung abgelesen werden. Temperaturunterschiede ergeben sich auf unterschiedliche Weise.

Zum einen können, wenn die Flächenkennzeichnung 81 auf einem nichtleitenden Gegenstand 84 angeordnet ist, unterschiedliche Wärmekapazitäten von Kunststoffschicht 82 und Metallstreifen 83 zu unterschiedlichen Oberflächentemperaturen führen. Ist der Gegenstand 84 beispielsweise aus Metall mit guter Wärmeleitung ausgebildet, so wird unterschiedlich schnelle Wärmeableitung von der wärmebeaufschlagten Oberfläche nach unten in den Gegenstand 84 ausgenutzt.

In einer nicht dargestellten Variante zu Fig. 8 und 9 kann der Stempel mit einer sehr schmalen Platte 86 ausgerichtet sein, die nur einen schmalen Streifen über der Abtastspur 89 bedeckt. Dann wird auch der Effekt der Wärmeleitung in den Metallstreifen 83 in Flächenrichtung der Flächenkennzeichnung ausgenutzt.

Zu diesem Ausführungsbeispiel zeigt Fig. 10 eine Variante, bei der ein solcher schmaler Stempel 106 auf einer Flächenkennzeichnung 101, ähnlich derjenigen, die in Fig. 8 dargestellt ist, derart in Oberflächenkontakt gebracht wird, daß er nur jeweils die einen Enden der Metallstreifen 103 abdeckt. Der Abtastpunkt 108 wird auf seiner Abtastspur 109 über die jeweils anderen Enden der Metallstreifen 103 gefahren und sieht unterschiedliche Temperaturen, die sich dadurch ergeben, daß die Metallstreifen 103 von ihrem durch den Stempel 106 erwärmten Ende mehr Wärme zum Bereich der Abtastspur 109 bringen als die dazwischenliegenden schlechter leitenden Bereiche.

Die in Fig. 8 und 10 gestrichelt umrandeten zu erwärmenden Bereiche 86 bzw. 106 können anstelle mit einem Wärmestempel auch mit einer Strahlungsquelle, ähnlich der Strahlungsquelle 10, 11 in Fig. 1, erwärmt werden, die zur Bestrahlung eines derart großen Bereiches ausgebildet ist, also beispielsweise im Falle der Fig. 10 durch eine entsprechend geformte Blende strahlt. Mit einer solchen Strahlungsquelle kann der jeweilige gestrichelt dargestellte Bereich ganzflächig gleichmäßig erwärmt werden.

Fig. 11 zeigt hierzu eine Variante, bei der über der Flächenkennzeichnung 111 mit Metallstreifen 113 die Abtastspur 119 des Abtastpunktes 118 entsprechend wie bei der Ausführungsform gemäß Fig. 10 gelegt ist. Die Metallstreifen 113 werden auch hier an ihrem anderen Ende erwärmt, aber nicht gleichmäßig über die gesamte Abtastzeit, sondern mit einem Strahlfleck 112, der auf einer Strahlspur 114 parallel zur Abtastspur 119 parallel zum Abtastpunkt 118 bewegt wird, wie dies Fig. 11 zeigt. Es kann die Abtast-und Bestrahlungseinrichtung verwendet werden, die in Fig. 1 dargestellt ist. Diese bewegt sich nun aber quer zu der dort dargestellten Richtung, also gemäß Fig. 1 in Richtung senkrecht zur Zeichnungsebene. Gegebenenfalls kann die Anordnung auch so sein, daß der Strahlfleck 112 bei seiner Bewegung dem Abtastpunkt 118 etwas vorauseilt, damit eine gewisse Wärmeausbreitungszeit zugelassen wird, bevor die Abtastung erfolgt.

Es ist noch zu erwähnen, daß die Kontaktwärmebehandlung mit einem Stempel, wie sie anhand der Fig. 8 bis 10 erläutert wurde, anstelle mit einem heißen Stempel auch mit einem kalten Stempel erfolgen kann. Die Wärmeflüsse und die Temperaturunterschiede ergeben sich dann mit umgekehrtem Vorzeichen.

Bei allen oben beschriebenen Ausführungsformen wird im Sinne des erfindungsgemäßen Verfahrens Wert darauf gelegt, daß die Temperaturbehandlung, die in den oben angegebenen Beispielen durch Wärmeeinstrahlung oder Kontakterwärmung bzw. -abkühlung erfolgt, die Abtastung nicht beeinflußt. Es ist eine deutliche Trennung vorgesehen. So wird bei dem Beispiel der Fig. 8 und 9 erst der Wärmestempel in Kontakt gebracht und dann in zeitlicher Trennung abgetastet. Bei den Ausführungsbeispielen entsprechend dem in Fig. 1 dargestellten, wird in zeitlicher Aufeinanderfolge erst erwärmt und dann abgetastet. Bei dem Beispiel der Fig. 11 ist eine räumliche Trennung von Abtastung und Erwärmung vorgesehen.

Der Sinn dieser Trennung von Wärmebehandlung und Abtastung besteht darin, daß die Wärmebehandlung die Temperaturermittlung nicht verfälscht. Würde im Beispiel der Fig. 9 der Abtastpunkt 88 die warme Platte 86 erfassen, so ergäbe sich eine Fehlmessung. Würde im Beispiel der Fig. 1 der Abtastpunkt 8 den Strahlfleck 12 erfassen, so würde er reflektierte Strahlung bzw. die momentan unabhängig von der Unterstruktur heiße Oberfläche sehen und ebenfalls falsche Ergebnisse ermitteln.

Eine weitere grundsätzliche Variante dieser Trennung von Wärmebehandlung bzw. Temperaturaktivierung und Abtastung zeigt die Fig. 12.

In Fig. 12 ist eine Flächenkennzeichnung 121 dargestellt mit Metallstreifen 123, entsprechend einem der vorher dargestellten Beispiele. Es wird mit einer Abtast-und Wärmebestrahlungseinrichtung entsprechend derjenigen in Fig. 1 gearbeitet. Abweichend von den zuvor beschriebenen Ausführungsformen liegen hier aber der Strahlfleck 132 und der Abtastpunkt 128 aufeinander. Würde man die zu Fig. 1 beschriebene Wärmequelle 10 verwenden, also eine einfache Glühlampe, so wäre eine Messung nicht möglich, da die Strahlungsquelle im Empfindlichkeitsbereich des Sensors 6 abstrahlen würde und die von der Oberfläche reflektierte Strahlung die Temperaturstrahlung der Oberfläche überdecken würde.

Führt man jedoch eine Spektraltrennung in der Weise durch, daß die Strahlungsquelle 10 in einem anderen Wellenlängenbereich strahlt, für den der Sensor 6 unempfindlich ist, so kann die Anordnung gemäß Fig. 12 verwendet werden. Beispielsweise kann eingestrahlt werden mit einer UV-Lampe, die keine Wärmestrahlung abgibt bzw. entsprechend befiltert ist. Die UV-Strahlung wird von der Flächenkennzeichnung absorbiert und in Wärme umgewandelt, die im Sinne der zuvor beschriebenen Temperaturaktivierung über die beschriebenen Effekte (hier insbesondere Wärmeleitung) zu Oberflächentemperaturunterschieden führt, die der Abtastpunkt 128 erkennt.

Wärmezufuhr kann aber auch induktiv oder kapazitiv erfolgen. Dies sei am Ausführungsbeispiel der Fig. 6 erläutert.

Die dargestellte Flächenkennzeichnungsanordnung 61 kann mit einer nicht dargestellten induktiven Heizeinrichtung, die im wesentlichen aus einer von Wechselstrom durchflossenen Spule besteht, aufgeheizt werden. Elektromagnetische Wechselfelder greifen hierbei in die Anordnung hinein und erzeugen in den Metallstücken 63 Wirbelströme, die zum Aufheizen der Metallstücke führen, während der Kunststoff 62 kalt bleibt. Es ergibt sich somit über den Metallstücken 63 eine andere Temperatur als über dem Kunststoff 62.

Bei kapazitiver Aufheizung wird die Kennzeichnungsanordnung 61 in den Spalt eines mit Hochfrequenz beaufschlagten Kondensators gebracht. Der Kunststoff 62 der Flächenkennzeichnungsanordnung 61 wirkt dabei als Dielektrikum im Kondensator und wird bei Hochfrequenzbeaufschlagung aufgrund dielektrischer Verluste aufgeheizt, während die Metallstücke 63 kalt bleiben.

Im Falle induktiver oder kapazitiver Heizung kann während der Beheizung gemessen werden, da die Wärmebeaufschlagung (induktiv oder kapazitiv) von der Abtastung deutlich getrennt ist, diese also nicht beeinflußt.

In den bisher beschriebenen Ausführungsformen wurden zur Temperaturaktivierung unterschiedlich gekennzeichneter Kennzeichnungsbereiche Wärmeleit-und Wärmekapazitätseffekte ausgenutzt. Es muß dabei stets dafür Sorge getragen werden, daß die unterschiedlich gekennzeichneten Bereiche einer gleichmäßigen Wärmebehandlung ausgesetzt werden, damit nicht unterschiedliche Wärmebehandlung die Meßwerte verfälscht.

Fig. 13 zeigt eine grundsätzlich andere Ausführungsform, bei der die Wärme den gekennzeichneten und ungekennzeichneten Bereichen unterschiedlich zugeführt wird.

Fig. 13 zeigt einen Schnitt durch eine Flächenkennzeichnung 131, bei der wegen der Übersichtlichkeit der Dar stellung die Schnitt schraffuren weggelassen sind.

Auf einem Gegenstand 134 sind Metallstreifen 133 aufgebracht und mit einer Deckschicht 135 abgedeckt. Der Aufbau entspricht etwa dem der Fig. 5. Die Deckschicht 135 besteht jedoch aus Material, das für eine bestimmte einzustrahlende Wellenlänge durchlässig ist, beispielsweise für UV-Licht.

Es wird Strahlung, beispielsweise UV-Licht, von schräg rechts oben in Pfeilrichtung eingestrahlt und fällt durch die in diesem Wellenlängenbereich durchlässige Deckschicht 135 entweder auf die Oberfläche des Gegenstandes 134 und wird dort absorbiert (kleine Kreise) oder fällt auf die Oberfläche der Metallstreifen 133 und wird von dort nach schräg links oben im Sinne der dargestellten Pfeile reflektiert und verläßt somit die Struktur.

Ersichtlich wird in die Oberflächenbereiche des Gegenstandes 134, die von den Metallstreifen 133 abgedeckt sind, weniger Wärme eingebracht als in die ungeschützten Oberflächenbereiche. Es ergeben sich somit weiterum Temperaturunterschiede, die abtastbar sind. Im beschriebenen Ausführungsbeispiel ist die Deckschicht 135 so gewählt, daß sie für die einfallende zur Erwärmung verwendete Strahlung durchlässig ist, im sichtbaren Licht aber undurchlässig ist und somit die Verwendung der Flächenkodierung als Geheimkodierung ermöglicht.

Der zu Fig. 13 beschriebene Temperaturaktivierungsprozeß, der auf unterschiedlicher Absorption eingestrahlter Strahlung beruht, kann auch mit anderen Ausbildungen der Flächenkennzeichnung erhalten werden, beispielsweise mittels unterschiedlich absorbierender Einfärbungen od. dgl.. Besonders einfach wird dies, wenn auf Unsichtbarmachung, also eine Deckschicht, verzichtet wird.

Bei den beschriebenen Ausführungsformen von Flächenkennzeichnungen wurden einige geeignete Materialien angegeben, die verwendbar sind, beispielsweise das Materialpaar Metall/Kunststoff, das sich durch unterschiedliche Wärmeleitung und unterschiedliche Wärmekapazität für die vorliegenden Zwecke eignet. Auch unterschiedliche Keramiken, die sich in diesen Parametern unterscheiden, wurden angeführt. Es sind jedoch eine große Zahl weiterer Materialien verwendbar, die für die vorgenannten Zwecke in ihren Parametern auszusuchen sind. Nur als ein weiteres Beispiel wird verwiesen auf leichte Kunststoffe mit eingemischten Schwermetallpigmenten, wie sie als Buntlacke erhältlich sind. Solche Materialien sind für die vorliegenden Zwecke verwendbar. Bei einer Flächenkennzeichnung können die unterschiedlichen Bereiche aus Lacken mit unterschiedlicher Pigmentbeimischung bestehen, wobei die Höhe des Pigmentanteiles die Wärmeleitung und die Wärmekapazität beeinflußt.

Bei allen zuvor beschriebenen Ausführungsformen von Flächenkennzeichnungen ist grundsätzlich eine Temperaturaktivierung erforderlich, da mit einem Temperatursensor die Oberflächentemperatur abgetastet werden muß, die mit der Temperaturaktivierung unterschiedlich einzustellen ist.

Die vorliegende Erfindung erschöpft sich aber nicht darin, sondern sieht eine Alternative hierzu vor, die an Hand von Figur 14 erläutert wird.

Dort ist im Schnitt ein Gegenstand 144 dargestellt, der auf seiner in der Figur oben liegenden Oberfläche gekennzeichnet ist. Die Kennzeichnung erfolgt hier lediglich dadurch, daß die nicht gekennzeichneten Bereiche 142 rauh, die gekennzeichneten Bereiche 143 dagegen poliert sind. Die nicht gekennzeichneten und gekennzeichneten Bereiche unterscheiden sich also nicht im Material, sondern lediglich in der Oberflächengestaltung.

Die unterschiedlich gekennzeichneten Oberflächenbereiche 142 und 143 können auch in einer anderen Weise mit unterschiedlichem Emissionsvermögen ausgerüstet werden. Beispielsweise können unterschiedliche Materialien verwendet werden, die sich im Emissionsvermögen unterscheiden.

Bei dieser Ausführungsform der Erfindung wird lediglich das unterschiedliche Emissionsvermögen der Flächenkennzeichnung ausgenutzt. Bei über die Fläche konstanter Oberflächentemperatur, wenn also die gekennzeichneten und ungekennzeichneten Bereiche gleiche Oberflächentemperatur haben, ergibt sich hier aufgrund des unterschiedlichen Emissionsvermögens der unterschiedlich gekennzeichneten Bereiche ein Unterschied in der Wärmeabstrahlung, der vom Temperatursensor erfaßt wird. Bei dieser Ausführungsform ist also eine Wärmeaktivierung nicht notwendig.

Auch bei dieser Ausführungsform kann allerdings durch eine Wärmeaktivierung in Form einer gleichmäßigen Erhöhung der Oberflächentemperatur, die Abtastbarkeit verbessert werden, da dann das Abstrahlungsniveau im ganzen ansteigt, womit auch die emissionsbedingten Differenzen größer werden. Ein weiteres alternatives Verfahren zur Temperaturaktivierung sei anhand der Fig. 3 bis 5 erläutert.

Hierbei wird die Flächenkennzeichnungsanordnung 31, 41, 51 einer Temperaturdifferenz zwischen ihrer Unterseite und ihrer Oberseite ausgesetzt. Beispielsweise kann der Gegenstand 34, 44, 54, auf dem die Flächenkennzeichnungsanordnung angebracht ist, beheizt werden und nimmt somit eine höhere Temperatur an als die über der Oberfläche der Flächenkennzeichnungsanordnung vorbeiströmende Luft. Es ergibt sich dadurch ein Wärmestrom senkrecht zur Flächenkennzeichnungsanordnung, also vom Gegenstand 34, 44 oder 54 nach oben senkrecht durch die Flächenkennzeichnungsanordnung. Der thermische Widerstand der Flächenkennzeichnungsanordnung ist aber dort geringer, wo Metallstücke 33, 43, 53 eingebettet sind, die eine bessere Wärmeleitung haben. An diesen Stellen nimmt also die äußere Oberfläche der Flächenkennzeichnungsanordnung eine höhere Temperatur an.

Der umgekehrte Effekt kann erzielt werden, wenn der Gegenstand 34, 44, 54 gegenüber der Umgebungsluft auf einer tieferen Temperatur gehalten wird, beispielsweise mit geeigneten Maßnahmen gekühlt wird.

Diese Form der Temperaturaktivierung kann vorzugsweise dort gewählt werden, wo die Flächenkennzeichnungsanordnung 31, 41, 51 auf Gegenständen 34, 44, 54 angeordnet ist, die aus anderen Gründen ohnehin auf gegenüber der Umgebung unterschiedlicher Temperatur gehalten sind. Beispielsweise kann diese Temperaturaktivierung dort eingesetzt werden, wo beheizte Gegenstände aus einem Ofen mit höherer Temperatur herauskommen und durch kühle Luft bewegt werden. Weitere Anwendungsmöglichkeiten bestehen in der Kennzeichnung von Heizkörpern, von heißen oder kalten Rohren, bei Motoren etc..

Eine Variante dazu wird anhand von Fig. 3 besprochen. Auf einem Gegenstand 34 aus Metall ist eine Isolierschicht 36 angeordnet und darüber eine heizbare Schicht 32. Darauf befindet sich die Kennzeichnungsanordnung 31 in Form von Metallstreifen 33. Das Ganze ist von Kunststoff 35 abgedeckt.

Die heizbare Schicht 32 besteht beispielsweise aus einem elektrischen Widerstandsmaterial, das flächig von Strom durchflossen und dadurch aufgeheizt wird.

Wärme strömt von der beheizbaren Schicht 32 nach außen zur äußeren Oberfläche der Flächenkennzeichnungsanordnung. Dabei wird die Wärme durch die Metallstreifen 33 besser transportiert als durch den dazwischenliegenden Kunststoff. Die äußere Oberfläche der Flächenkennzeichnungsanordnung ist also über den Metallstreifen 33 wärmer als über den dazwischenliegenden Bereichen, in denen der Kunststoff weniger gut leitet.

## Ansprüche

1. Thermisch lesbare Flächenkennzeichnungsanordnung an einem Gegenstand, deren markierte Bereiche sich bei der Ablesung einer Kennzeichnung von den unmarkierten Bereichen in ihrer Oberflächentemperatur unterscheiden, dadurch gekennzeichnet, daß zur Erzeugung der Temperaturunterschiede der Flächenkennzeichnungsanordnung (1, 31, 41, 51, 61, 81, 101, 111, 121, 131) Wärme zu-bzw. abgeführt wird und sich dabei die markierten Bereiche (3, 33, 43, 53, 63, 83, 103, 113, 123, 133) in ihrer Temperaturänderung von der der unmarkierten Bereiche unterscheiden.

2. Flächenkennzeichnung nach Anspruch 1, dadurch gekennzeichnet, daß sich die Bereiche (3, 2; 33, 32; 43, 45; 53,55; 63,62; 83, 82; 103, 101; 113, 111; 123, 121) durch ihr Wärmeleitvermögen unterscheiden.

3. Flächenkennzeichnung nach Anspruch 1, dadurch gekennzeichnet, daß sich die Bereiche (3, 2; 33,32; 43, 45; 53, 55; 63, 62; 83, 82; 103, 101; 113, 111; 123, 121) durch ihre Wärmekapazität unterscheiden.

4. Flächenkennzeichnung nach einem der vorhergehenden Ansprüche, dadurch gekennzeichnet, daß sich die Bereiche (133, 134) durch ihr Reflexionsvermögen für auffallende Strahlung unterscheiden.

5. Flächenkennzeichnung nach einem der vorhergehenden Ansprüche, dadurch gekennzeichnet, daß die Flächenkennzeichnung (31) aus einem Kunststoffolienetikett (32) mit Metallfilmkennzeichnung (33) besteht.

6. Flächenkennzeichnung nach einem der vorhergehenden Ansprüche, dadurch gekennzeichnet, daß die Flächenkennzeichnung (1, 31, 41, 51, 61, 81, 101, 111, 121, 131) mit einer im sichtbaren Spektralbereich undurchlässigen Deckschicht (5, 35, 45, 55, 65, 135) geringen Wärmeleitvermögens abgedeckt ist.

7. Verfahren zur Wärmezu-bzw. -abfuhr bei einer thermisch lesbaren Flächenkennzeichnungsanordnung nach einem der vorhergehenden Ansprüche, dadurch gekennzeichnet, daß die abzutastenden Flächenbereiche (9, 69, 89, 109, 119, 128) gleichmäßig einer Wärmebehandlung durch Wärmezu-oder -abfuhr ausgesetzt werden, wobei die Wärmebehandlung (12, 72, 86, 106, 114, 132) von der Abtastung getrennt erfolgt.

8. Verfahren nach Anspruch 7, dadurch gekennzeichnet, daß die Wärmebehandlung im Flächenkontakt mit einem Heizbzw. Kühlkörper (86, 106) erfolgt.

9. Verfahren nach Anspruch 7, dadurch gekennzeichnet, daß daß die Wärmebehandlung durch Strahlungsbeaufschlagung (12, 72, 112, 132) erfolgt.

10. Verfahren nach einem der Ansprüche 7 bis 9, dadurch gekennzeichnet, daß die Wärmebehandlung (Fig. 8, Fig. 13) ganzflächig auf dem Gebiet der Flächenkennzeichnung (81, 131) erfolgt.

11. Verfahren nach einem der Ansprüche 7 bis 9, dadurch gekennzeichnet, daß die Wärmebehandlung auf einem schmalen, die Abtastspur (9) überdeckenden Bereich (12) erfolgt.

12. Verfahren nach einem der Ansprüche 7 bis 11, dadurch gekennzeichnet, daß die Trennung zeitlich erfolgt (Fig. 1, Fig. 7, Fig. 8).

13. Verfahren nach einem der Ansprüche 7 bis 9 plus 11, dadurch gekennzeichnet, daß die Trennung räumlich erfolgt (Fig. 1, Fig. 7, Fig. 10, Fig. 11).

14. Verfahren nach Anspruch 13 bei quer zu einer Abtastspur erstreckten Kennzeichen unterschiedlicher Wärmeleitung, dadurch gekennzeichnet, daß die Wärmebehandlung in einem - schmalen, parallel und im Abstand zur Abtastspur (109, 119) liegenden Streifen (106, 114) erfolgt.

15. Verfahren nach Anspruch 9, dadurch gekennzeichnet, daß zur Trennung der Spektralbereich der Beaufschlagungsstrahlung deutlich vom Empfindlichkeitsbereich des Sensors entfernt liegt (Fig. 12).

16. Vorrichtung zur Durchführung des Verfahrens nach einem der Ansprüche 7 bis 15, dadurch gekennzeichnet, daß eine die Flächenkennzeichnung (1, 31, 41, 51, 61, 81, 101, 111, 121, 131) aufheizende bzw. abkühlende Wärmequelle (10, 86) vorgesehen ist.

17. Vorrichtung nach Anspruch 16, dadurch gekennzeichnet, daß die Wärmequelle als Heiz- bzw. Kühlkörper (86) mit Kontaktfläche ausgebildet ist.

18. Vorrichtung nach Anspruch 16 zur Aufheizung, dadurch gekennzeichnet, daß die Wärmequelle als Wärmestrahlungsquelle (10) ausgebildet ist.

19. Vorrichtung nach Anspruch 18, dadurch gekennzeichnet, daß die Strahlungsquelle (10) eine Fokussiereinrichtung (11) aufweist.

20. Vorrichtung nach einem der Ansprüche 16 bis 19, dadurch gekennzeichnet, daß die Wärmequelle (10) parallel zur Flächenkennzeichnung (1) bewegbat ausgebildet ist.

21. Vorrichtung nach Anspruch 20, dadurch gekennzeichnet, daß die Wärmequelle(10) mit einer Temperaturabtasteinrichtung (6) bewegungsgekoppelt ist.

22. Thermisch lesbare Flächenkennzeichnungsanordnung mit gekennzeichneten und ungekennzeichneten Bereichen, die sich bei der Ablesung in ihrer Wärmeabstrahlung unterscheiden, dadurch gekennzeichnet, daß die Oberflächen der unterschiedlich gekennzeichneten Bereiche (142, 143) unterschiedliches Emissionsvermögen im spektralen Bereich thermischer Strahlung aufweisen.

Fig 1

Fig 2

0 249 917

Fig 3

35   33   31   36   32   34

Fig 4

43   45   41   44

Fig 5

53   55   53   51   54

Fig 6

Fig 7

Fig 8

87

86

81

83  82  83

84  Fig 9

106

101

103

109

108  Fig 10

112  111

114

113  119

118  Fig 11

132   121

123

123

128        Fig 12

135                131

133   133

134        Fig 13

142  143  142  143  142

144        Fig 14